# EUROPEAN PATENT SPECIFICATION

(11) **EP 1 578 086 B1**
(45) Date of publication and mention of the grant of the patent: **04.05.2011**
(21) Application number: 04006687.0
(22) Date of filing: 19.03.2004
(51) Int. Cl.: H04L 29/12, H04L 12/28

(54) **Addressing mechanism for nodes in a communication system**
Adressiervorrichtung für Knoten in einem Kommunikationsnetz
Mécanisme d'adressage pour les noeuds d'un réseau de communication

(43) Date of publication of application: 21.09.2005
(73) Proprietor: Sony Deutschland GmbH, 10785 Berlin (DE)
(72) Inventor: Nogueira-Nine, Juan, 10327 Stuttgart (DE); Krämer, Oliver, 70327 Stuttgart (DE)
(74) Representative: Witte, Weller & Partner

(56) References cited:
- US-A1- 2003 048 806
- US-B1- 6 625 145
- WILLIG A ET AL: "Altruists in the picoradio sensor network" IEEE, 28 August 2002 (2002-08-28), pages 175-184, XP010623307
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

The present invention generally relates to the field of wired or wireless networks comprising nodes communicating with each other on the basis of protocol addresses. Specifically, the present invention relates to an address mechanism for the nodes of such a communication system, to the communication system comprising such nodes as well as a communication method for the communication between nodes of such a communication system. Generally, a node is defined by its role in a communication system or network and its communication possibilities. The nodes can have different wireless or wired communication means tailored to their individual role in the network and other constrains thus allowing different communication patterns. Hereby, a communication system such as a network or the like can comprise nodes of a single type or nodes of various types. For example, a node equipped with a sensor device can act as a data collector for sensing local information. Other node types can use their wireless or wired interfaces to receive and re-transmit information from other nodes. A further type of nodes can act as gateway nodes providing an interface between a certain network, such as a sensor network and a larger communication system.

In order to support the identification and communication between nodes in existing communication systems such as wireless and wired data network used different addresses at different protocol levels or protocol layers to identify the nodes that are part of the communication system. Generally, the lower the protocol level is in which an address is defined, the smaller is the range or the area that the communication system or the part of the communication system can cover. A common example of such a system is the addresses at the network and the link layers in a TCP/IP Ethernet based network. Hereby, the protocol uses globally unique addresses at both levels but with different purposes. The low level (low range) Ethernet is used to resolve the destination address in a "one-link" area. Using this address, only the nodes (hosts) connected to the same segment in a wired network or within the radio range of the transmitter node in a wireless network could directly communicate with each other. The high level (large range) address (IP address) has a hierarchical structure that makes it a routable address. This routable feature makes it possible that nodes (hosts) connected to the network at different places, in different segments or wireless ranges can communicate with each other.

The benefit of having a second address at a lower level is that, if the destination address of a receiving node is transmitted at the beginning of a frame, all nodes receiving the frame would reject the frame, except the node having the low level address matching to the one in the frame. The other nodes immediately stop the reception of the rest of the frame after determining that the low level address in the frame does not match their own low level address. Thus, only one receiving node in every small range of the network or communication system where the frame is communicated is decoding the frame and passing it to the network layer. These nodes are called intermediate nodes (hosts).

The network layer in the node (host) which originally transmits the frame and in everyone of these intermediate nodes (hosts) knows the network address of the next (neighbouring) host or node in the actual path of the frame. Further, the nodes need also to know the correspondent link level address. This information is provided by the address resolution protocol that uses broadcast messages at link level to request from the node or a host with the matching network address to answer with a message indicating its link level address.

This principle is the addressing principle in any TCP (IP) Ethernet based network and it is physical layer independent. The addressing principle works in the same way in a standard wired Ethernet network, in its wireless version IEEE 802.11x, in the broadband wireless network ETSI HIPERLAN/2 or in Bluetooth networks.

Generally, there are two main drawbacks in the above-mentioned address resolution mechanism. The first drawback is the need to use the address resolution protocol itself and the second drawback is that both addresses (link level address and network address) have to be set manually to ensure the global uniqueness of each of the two addresses. Two different organisations take care of providing ranges of link level addresses to the network hardware interface manufacturers and network level addresses to the network service providers. The just mentioned second drawback is tried to being solved in the new IPv6 network protocol in which the network address in every node can be automatically built based on the link level address while keeping global uniqueness of the addresses. Nevertheless, the need of an address resolution protocol (now called neighbour discovery) is still present.

The benefit of having addresses at a low level allowing to reject other node's frames with little frame processing can be more exploited by using node addresses at even lower levels. This is e.g. proposed in HIPERLAN/2, where every node has a shorter address or node identification which is the one used for real data transmission. The address uniqueness is hereby ensured by a central controller (access point) which is doing the address assignment dynamically as new nodes join the network. The access point also takes care of the correspondence with the link level address by keeping an address matching table.

However, the above proposals for address resolution are not applicable to a low power, low rate and low cost network, and particularly not to a low power, low rate and low cost wireless network. The broadcasting of messages consumes bandwidth and power for all nodes listening to the communication medium periodically. Also, in small devices, such as passive sensor nodes, it is not possible to store tables with address mappings due to memory restrictions. Some networks with these characteristics, like IEEE 802.15.4 are using only one address in the higher layer of the protocol and thus no address resolution is needed at all. The disadvantage here is that every node must process every received frame before being able to determine if it is the destination node.

The major challenge in existing low power and low rate wireless networks and in wireless sensor networks in particular is how to reduce the power consumption of the nodes. As the radio hardware is the most power consuming part in those nodes, most of the research is focused to reduce the time this radio hardware is active. To reduce the time the transmitter is active, several solutions have been investigated either at node level (data compression) or at network level (data fusion).

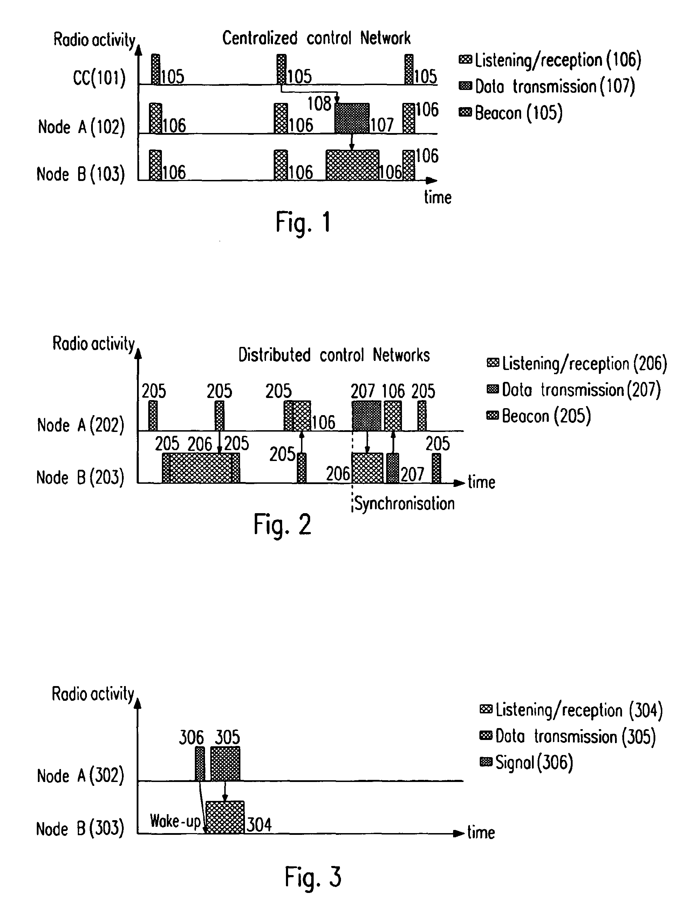

Reducing the time the receiver of the radio hardware is activated is a more difficult problem, since one node does not know when other nodes are transmitting data. In order to synchronise the transmitter and the receiver several solutions exist:
1.) A centralised control using a superframe structure with a TDMA or CSMA scheme or a combination of both: A central controller manages how the nodes access the physical medium by broadcasting a beacon with information about the transmission time assigned to every node. This is the mechanism which is used in broad band and wireless networks like HIPERLAN/2 and 802.11 (when operating in the infrastructure mode) and also in low rate networks like ZigBee (IEEE 802.15.4) operating in beacon-enabled mode. This concept is illustrated in Fig. 1. Hereby, a central controller 101 (access point or co-ordinator) peridocially transmits a beacon with information about the TDMA superframe structure being used. When the nodes A and B (102 and 103) are synchronised with the central controller 101, they always listen during the beacon transmission time to receive the beacon 105 which is periodically transmitted by the central controller 101. The beacon 105 is e.g. informing that the node A has data to send to the node B and that the data exchange must start at the timepoint 108. Then, at the timepoint 108, the node A activates its transmitter and the node B activates its receiver. In the example shown in Fig. 1, node B activates its receiver shortly before the timepoint 108 and shuts of the receiver a short time after the transmitter of node A and the transmission in order to make sure that all data transmitted from node A are received in the node B. The described example represents a situation which is called ad-hoc peer-to-peer or direct mode in centralised networks. In a normal centralised operation, the data exchange occurs always through the central controller 101, which consumes even more power.
2.) A decentralised (distributed) control where every node transmits a beacon for synchronisation purposes: This is e.g. used in wireless networks like 802.11 operating in an independent mode where the stations (nodes) use the beacons to synchronise their clocks. When the synchronisation is done, the nodes will have their receivers active during a period of time immediately after the beacon time. This period of time can be used by one node to send a data transmission request message to indicate to another node that it has data appended to it completing the data synchronisation. Another solution for node synchronisation is to use beacons in every node to transmit its own time reception pattern, making other nodes aware about the time the node will be in a receiving mode. This principle is illustrated in Fig. 2 using a modified version of a mechanism proposed as MAC (Medium Access Control) solution for 802.15.4, but which was finally not included in the standard. The procedure consists in that every node listens to the medium periodically to "hear" the beacons 205 coming from other nodes. As shown in Fig. 2, e.g. node B listens periodically during a time period 206 between two beacons 205 transmitted by the node B. During the listening period 206, node B receives the beacon 205 from node A containing information that node A would like to transmit data to node B and about the transmission timepoint and also learns at what timepoints node A will have its receiver activated. Node B can then adjust its beacon transmission period and transmit the next beacon 205 during the time period 106 during which node A has turned its receiver on. From a synchronisation timepoint on which was transmitted by node A in a beacon 205 to node B during the receiving time period 206, node A and node B are synchronised and can exchange data.

Although both above described solutions resolve the synchronisation problem they require the nodes to waste energy while listening to the communication medium periodically to be able to receive the beacons from other nodes and to furthermore check if some node wants to send data or when some node will be ready to receive data.

US 2003/048806 A1 discloses a method for address allocation in ad hoc networks, particularly to address selection in overlapping, uncoordinated networks and more particularly to preventing address contention in address lid generation in such networks.

The object of the present invention is therefore to provide an address mechanism for nodes in a communication system, a communication system itself and a communication method for a communication of nodes in a communication system, which enables a significant reduction of the power consumption in the nodes.

The above object is achieved by a node for a communication system according to claim 1 and a node for a communication system according to claim 4. Further, the above object is achieved by a communication system comprising such nodes according to claim 8 and a communication method according to claim 11.

The general idea of the present invention is to still use two addresses, namely a low level and a high level address, but to use a different addressing mechanism to resolve the address mapping. According to the present invention it is suggested to avoid the use of any address resolution protocol by establishing a relationship between the low and the high level addresses in such a way that the low level address can be generated or determined on the basis of the corresponding high level address. Then every node of the communication system can determine its own low level address from its unique high level address and can also calculate the address of other nodes before transmitting data to it just by knowing the unique high level address of the receiving node.

The present invention is applicable for nodes of wired or wireless communication systems or network of any kind since it provides a very simple and easy addressing mechanism for the communication between nodes. However, considering the significant reduction in power consumption, the present invention is particularly advantageous for wireless networks, particularly wireless networks with sensor nodes from which information is retrieved periodically or irregularly. Generally, the communication system is based on the use of a high level or unique protocol address which uniquely identifies each node in the communication system and a low level address or identification number additionally identifying every node. The identification number is generated or based on the unique protocol address identifying each node, whereby the identification number allocated to each node can be a unique identification number uniquely identifying the node in the communication system or an identification number which is only unique in a part of the communication system but not in the entire communication system. Such a part of a communication system can e.g. be an intra-network, within which the identification number of each node is unique, whereby the intra-network is connected to a larger network such as the Internet in which the identification number might not be unique.

The node according to claim 1 comprises control means for controlling the operation of the node, and transmitting means for transmitting information to other nodes of the communication system, whereby the control means controls the transmitting means to address another node with an identification number identifying said other node, said control means generating the identification number from the unique protocol address identifying said other node. Such node is e.g. an active node, which collects, receives or retrieves information from other nodes and forwards the information to further nodes of the network. The identification number is shorter than the unique protocol address. Further, the control means, before transmitting data to another node, generates the identification number from the unique protocol address identifying the other node and then triggers a wake-up generator to generate and transmit a wake-up signal comprising said identification number to said other node, whereafter said data is transmitted to said other node. Further advantageously, the identification number is a part of said protocol address. Alternatively, the identification number is calculated from the protocol address. Hereby, the control means may advantageously calculate the identification number from the protocol address using a hash function.

The node according to claim 4 comprises control means for controlling the operation of said node, and receiving means for receiving information from other nodes of the communication system, whereby the control means generates an identification number from the unique protocol address of said node, said identification number identifying said node for the communication with other nodes in the communication system. Such a node is e.g. a passive sensor node in the communication system which senses information which is then collected, retrieved or received by another node of the system. The identification number is shorter than the protocol address. Further the control means comprises a wake-up detector for comparing an identification number received in a wake-up signal through the receiving means with said generated identification number in order to determine if said wake-up signal is addressed to the node. Further advantageously, the identification number is part of the protocol address. Alternatively, the identification number is calculated from the protocol address. Hereby, it is particularly advantageous if the control means calculates the identification number from the protocol address using a hash function.

Advantageously, the node comprises a memory means in which the generated identification number is stored.

The communication system according to claim 8 comprises at least two nodes as set out above, whereby the node comprising the transmitting means acts as a transmitting node and the node comprising the receiving means acts as a receiving node, and whereby the transmitting node and the receiving node generate the identification number of the receiving node from the unique protocol address of the receiving node on the basis of the same generating rule. Hereby, the nodes of the communication system simply have to know the generating rule so that, when a node is to be addressed, the identification number or low level address of the receiving node can be generated from the unique protocol address or high level address of the receiving node. Hereby, the receiving node can e.g. upon joining a network and after receiving its unique protocol address in the network generate its own identification number on the basis of this generating rule and stored in the memory means. Hereby, upon receiving a wake-up signal, the stored identification number can easily be compared with the identification number contained in the wake-up signal so that the receiving node can determine if the wake-up signal is addressing the receiving node or not. It is to be noted that the timepoint of the generation of the identification number from the unique protocol address on the basis of the generating rule can also be after a receiving node has been manufactured. Also, the receiving node may receive a different unique protocol address each time it changes the network.

Advantageously, the transmitting node and the receiving node generate the identification number as a part of the unique protocol address identifying the receiving node. Alternatively, the transmitting node and the receiving node generate the identification number from the unique protocol address identifying the receiving node using the same hash function. Hash functions are also called one-way functions because it is easy to determine the hash value from a data string but mathematical infeasible to determine the data string from the hash value. The use of a hash function is a simple and convenient way to generate a short identification number from the unique and long protocol address. Instead of a hash function, any mapping function generating a local range and short address from a long range (unique protocol) address could be used, e.g. the lower n bits of the long address can be used for the short address. Using a hash function requires more computational resources than a simple mapping function, but has the advantage of resulting in a better distribution (randomness) of the short local addresses. Thus, the probability that two too long addresses (two unique protocol addresses) in the same network are mapped to an identical short address (identification number) is minimised by using a hash function, especially since unique protocol addresses or MAC device addresses are usually structured in some way.

The present invention is further explained in the following description of preferred embodiments in relation to the enclosed drawings, in which:
Fig. 1 shows a prior art node synchronisation mechanism in a centralised network,
Fig. 2 shows a prior art node synchronisation in a decentralised network,
Fig. 3 shows an address mechanism according to the present invention,
Fig. 4 shows schematic block diagrams of a receiving node and a transmitting node according to the present invention, and
Fig. 5 schematically shows a schematic block diagram explaining the communication method according to the present invention,

Fig. 3 shows schematically the node addressing mechanism according to the present invention. In contrary to the node addressing and synchronisation mechanisms known in the prior art as shown and explained in relation to Figs. 1 and 2, the present invention proposes a node addressing mechanism in which a node A in order to transmit data to a node B sends a wake-up signal 306 to the node B. The node B, from the received wake-up signal 306, learns that node A intends to transmit data and activates its receiver. Thereafter, node A transmits the data during the time period 305, during which node B has its receiver activated in order to receive the data from node A. Hereby, the wake-up signal 306 can contain the necessary data enabling node B to activate its receiver on or before the timepoint at which node A starts the transmission of data and the length of the data transmission. Otherwise, the wake-up signal 306 could simply be an indication for node B that the data transmission from node A will start at a preset timepoint after the receipt of the wake-up signal 306 and will last for a preset amount of time.

Since the node A and the node B are part of a communication system comprising a number of nodes, it is necessary to identify the target or receiving node in the wake-up signal 306. In order to simplify this address mechanism and reduce the power consumption of the receiving nodes, the present invention proposes to use two addresses for each node. Within the communication system, each node of the system is uniquely identified by a unique protocol address, as e.g. the 48 bit MAC addresses used in Ethernets or IEEE 802.3 networks. Further, each node is identified with an identification number which is generated from the unique protocol address of the respective node. The identification number can be unique within a communication system but will more likely be only unique within a certain part of the communication system, e.g. an intra-network, wireless sensor network or the like being part of and/or connected to a larger network or communication system. In order to speed up the wake-up procedure and to reduce the power consumption in the receiving node, the identification number should be as short and small as possible. The receiving node receiving a wake up signal 303 then only has to read a short identification number in order to determine if the wake-up signal is addressed to itself or to another node. If the wake-up signal is addressing another node, the receiving part of the respective node can be turned off again so that no more power is consumed. The longer the identification number, the longer the time the receiving nodes need to receive and compare the identification number with their own identification number. For the transmission of the data, such as the data 305 of the example shown in Fig. 3, either the identification number or the unique protocol address of the receiving node can then be used.

According to the present invention, each identification number is generated from the unique protocol address of each node. The allocation of the unique protocol addresses or long range addresses to each node can be fix or variable, i.e. when a node joins a communication system or network, the unique protocol address is either fixedly allocated or variably allocated depending on the network requirements. However, each communication system or network is assumed to have protocol addresses which are globally unique for each node of the system. In order to reduce processing power, power consumption and enhance the simplicity of the communication between the nodes, each node is additionally identified by an identification number which is generated from the unique protocol address. Hereby, the nodes do not need to store large address tables in which the unique protocol addresses and the respectively allocated identification numbers are stored, but is able to generate the identification number of a target or receiving node from its unique protocol address. Hereby, it s sufficient to determine a common generating rule according to which all nodes of the communication system are able to generate the identification numbers from the unique protocol addresses. The generating rule can hereby simply determine that an identification number is a part, e.g. the lower n bits of the unique protocol address. Further, any suitable mathematical function can be used to calculate the shorter identification numbers from the longer unique protocol addresses, as long as the identification number is shorter than the unique protocol address. Since it is sufficient to store the common generating rule within each node, memory space can be saved and the processing power can be significantly reduced.

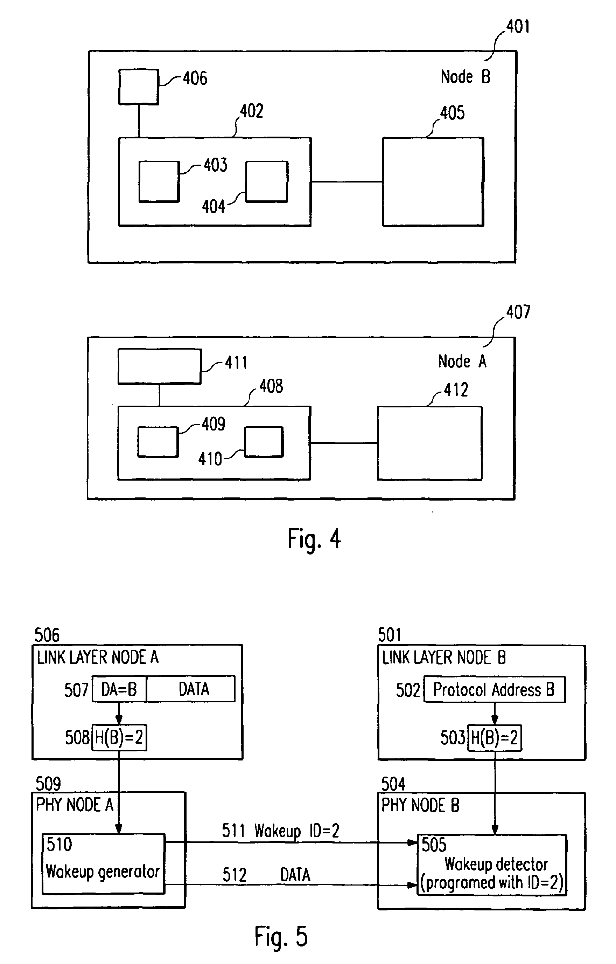

In Fig. 4, schematic examples of a receiving node 401 (node B) and a transmitting node 407 (node A) are shown. Generally, it is to be noted that the nodes of the present invention can be any kind of nodes forming or being part of a communication system or communication network such as wireless or wired networks, ad-hoc networks, sensor networks and the like and any combination thereof. Hereby, the present invention is particularly advantageous in wireless sensor networks, in which a number of sensor nodes or passive nodes regularly or irregularly sends information which is collected, retrieved or received by active nodes which process and/or forward the collected information. Hereby, a major issue is the power consumption of such sensor or passive nodes. An example for such a passive or sensor node is shown as node 401 in Fig. 4. This kind of node 401 can also be called a target node or a receiving node, since it comprises only the essential elements for receiving a wake-up signal 306 (cf. Fig. 3) to determine if the wake-up signal is addressing itself or another node and some kind of sensing means which senses or collects useful information. The node 401 as shown in Fig. 4 e.g. comprises a control means 402 which is e.g. a microprocessor and the like which comprises a memory 403 for storing information or data sensed by a sensing means 406. The memory means 403 can further store the generating rule for generating the identification number of the node 401 from its unique protocol address or can store the identification number after its generation from the unique protocol address. Further, the control means 402 comprises a wake-up detector 404 which, upon receiving a wake-up signal from a transmitting node 407, determines if the identification number contained in the wake-up signal 306 matches the identification number of the node 401 and, if yes, activates the receiving means 405 for the reception of data from the transmitting node 407. For receiving the wake-up signal 306 as well as subsequent information from the transmitting node 407, the node 401 comprises the receiving means 405 for receiving data via the wired or wireless communication system. If the node 401 is just a passive node, the transmitting nodes 407 actively retrieves or collects the wanted information or data from the receiving node 401 after the receiving means 405 was activated for the receipt of corresponding collect or retrieve signals. Additionally, the receiving node 401 could further comprise active transmitting means which actively transmit the wanted information to the transmitting node 407 after receipt of a corresponding wake-up signal 306. It is to be noted that any kind of passive or active receiving and/or transmitting mechanism can be used.

The transmitting node 407 as shown in Fig. 4 essentially comprises the control means 408, such as a microprocessor and the like for controlling the functions of the transmitting node 407. The control means 408 comprises a memory means 409 for storing information necessary for the operation of the transmitting node 407 but also storing the generating rule for generating the identification numbers from the unique protocol addresses of the respective receiving nodes. Further, the transmitting node 407 comprises a transmitting and receiving means 412 for transmitting and receiving information, signals or data to and from other nodes of the communication system. The receiving means 405 of the receiving node 401 and the receiving and transmitting means 412 of the transmitting node 407 are e.g. the radio hardware of the respective nodes in case of a wireless radio communication system.

In Fig. 5, the functionalities of the receiving node 401 (node B) and the transmitting node 407 (node A) are further explained. In the link layer functionality 501 of the receiving node B, the unique protocol address of node B is used to generate the identification number of node B. This is e.g. done in the control means 402 as shown in Fig. 4. The control means 402 receives the unique protocol address 502 either upon calibration of the node 401, upon joining the communication system or any other suitable timepoint and uses the protocol address 502 to generate the identification number using the common generating rule of the communication system. Hereby, the generating rule is indicated as a function H, which is e.g. a suitable mathematical function such as a hash function. In the shown example, protocol address 502 of the node B is calculated as H(B)=2 (reference numeral 503), which means that the identification number is "2". In the physical layer 504 of the receiving node B, the wake-up detector 505 (which corresponds to the wake-up detector 404 of the receiving node 401 of Fig. 4), is programmed with the identification number "2". Thus, upon receiving a wake-up signal 511 (corresponding to the wake-up signal 306 explained in relation to Fig. 3), the wake-up detector 505 compares the identification number contained in the wake-up signal 511 to the identification number of the receiving node B stored somewhere in the control means 402 of the receiving node 401. If the wake-up detector 505 determines a match between the received identification number and the stored identification number, the receiving means 405 is activated in order to receive data 512 from a transmitting node. Hereby, the activation of the receiving means 405 can be preset, i.e. can start at a certain timepoint after the receipt of a wake-up signal and may last for a preset time period, or can be controlled by data controlled in the wake-up signal 511.

In the link layer functionality 506 of the transmitting node A, the identification number of a receiving node B is calculated with the same generating rule H. Hereby, the transmitting node A e.g. receives data to be transmitted to the receiving node B and the corresponding unique protocol address of the node B (cf. reference numeral 507). Then, the control means 408 of the transmitting node 407 calculates the identification number from the unique protocol address using the function H (cf. reference numeral 508). In the physical layer 509 of the transmitting node A, the wake-up generator 510 (which corresponds to the wake-up generator 410 comprised in the control means 408 of the transmitting node 407 of Fig. 4), generates and transmits a wake-up signal 511 (corresponding to the wake-up signal 306) to the receiving node B. After a preset timepoint, the data 512 are then transmitted to the receiving node B. It is to be noted that the wake-up signal 511 and the data 512 are usually broadcasted within the communication system or a part of the communication system from the transmitting node A. Hereby, the receiving nodes with an identification number which is different from the identification number contained in the wake-up signal 511 stop the receipt of the wake-up signal after determining the mismatch of the identification numbers. Only the receiving node which determines a match of the identification numbers continues to receive the wake-up signal 511 and subsequently receives the data 512 from the transmitting node A.

## Claims

1. Node (407) for a communication system comprising nodes communicating with each other on the basis of protocol addresses, each node being uniquely identified by a unique protocol address, said node (407) comprising
control means (408) adapted to control the operation of said node,
transmitting means (412) adapted to transmit information to other nodes of the communication system,
whereby said control means (408) is adapted to control said transmitting means (412) to address another node with an identification number identifying said other node, and whereby said control means (408) before transmitting data to another node, being adapted to generate said identification number from the unique protocol address identifying said other node said identification number being shorter than said unique protocol address and then to trigger a wake-up generator (510) to generate and transmit a wake-up signal comprising said identification number to said other node, whereafter said data is transmitted to said other node.

2. Node (407) according to claim 1,
**characterised in,**
**that** said identification number is a part of said protocol address.

3. Node (407) according to claim 1,
**characterised in,**
**that** said control means (408) is adapted to calculate said identification number from said protocol address using a hash function.

4. Node (401) for a communication system comprising nodes communicating with each other on the basis of protocol addresses, each node being uniquely identified by a unique protocol address, said node comprising
control means (402) adapted to control the operation of said node,
receiving means (405) adapted to receive information from other nodes of the communication system,
whereby said control means (402) is adapted to generate an identification number from the unique protocol address of said node, said identification number being shorter than said unique protocol address and identifying said node for the communication with other nodes in the communication system, and whereby said control means (402) comprises a wake-up detector (505) adapted to compare an identification number received in a wake-up signal through said receiving means (405) with said generated identification number in order to determine if said wake-up signal is addressed to the node.

5. Node according to claim 4,
**characterised in,**
**that** said identification number is a part of said protocol address.

6. Node according to claim 4,
**characterised in,**
**that** said control means is adapted to calculate said identification number from said protocol address using a hash function.

7. Node according to one of the claims 4 to 6,
**characterised by**
a memory means in which said generated identification number is stored.

8. Communication system comprising nodes communicating with each other on the basis of protocol addresses, each node being uniquely identified by a unique protocol address, with
a node (407) according to one of the claims 1 to 3 as a transmitting node and
a node (401) according to one of the claims 4 to 7 as a receiving node,
whereby said transmitting node and said receiving node are adapted to generate said identification number of said receiving node from the unique protocol address of said receiving node on the basis of the same generating rule.

9. Communication system according to claim 8,
**characterised in,**
**that** said transmitting node and said receiving node are adapted to generate said identification number as a part of the unique protocol address identifying said receiving node.

10. Communication system according to claim 8,
**characterised in,**
**that** said transmitting node and said receiving node are adapted to generate said identification number from the unique protocol address identifying said receiving node using the same hash function.

11. Communication method for the communication between a transmitting node and a receiving node of a communication system comprising nodes communicating with each other on the basis of protocol addresses, each node being uniquely identified by a unique protocol address,
whereby a transmitting node addresses a receiving node with an identification number identifying said receiving node, whereby said transmitting node and said receiving node generate said identification number from the unique protocol address identifying said receiving node on the basis of the same generating rule, said identification number being shorter than said unique protocol address, whereby said transmitting node, before transmitting data to said receiving node, generates said identification number from said unique protocol address identifying said receiving node and then generates and transmits a wake-up signal comprising said identification number to said receiving node, and whereby said receiving node compares said identification number received in said wake-up signal with said identification number generated in said receiving means in order to determine if said wake-up signal is addressed to said receiving node.

12. Communication method according to claim 15,
**characterised in,**
**that** said transmitting node and said receiving node generate said identification number as a part of the unique protocol address identifying said receiving node.

13. Communication method according to claim 15,
**characterised in,**
**that** said transmitting node and said receiving node generate said identification number from the unique protocol address identifying said receiving node using the same hash function.

## Patentansprüche

1. Knoten (407) für ein Kommunikationssystem, das Knoten aufweist, die miteinander auf der Basis von Protokoll-Adressen kommunizieren, wobei jeder Knoten einzigartig durch eine einzigartige Protokoll-Adresse identifiziert ist, wobei der Knoten (407) aufweist
eine Steuereinrichtung (408), die dazu ausgelegt ist, den Betrieb des Knotens zu steuern,
eine Übermittlungseinrichtung (412), die dazu ausgelegt ist, Information an andere Knoten des Kommunikationssystems zu übermitteln,
wobei die Steuereinrichtung (408) dazu ausgelegt ist, die Übermittlungseinrichtung (412) zu steuern, um einen anderen Knoten mit einer Identifikationsnummer zu adressieren, die den anderen Knoten identifiziert, und wobei die Steuereinrichtung (408) vor dem Übermitteln von Daten an einen anderen Knoten, dazu ausgelegt ist, eine Identifikationsnummer aus der einzigartigen Protokoll-Adresse zu erzeugen, die den anderen Knoten identifiziert, wobei die Identifikationsnummer kürzer als die einzigartige Protokoll-Adresse ist, und dann einen Weck-Generator (510) auszulösen, um ein Weck-Signal, das die Identifikationsnummer aufweist,
zu erzeugen und an den anderen Knoten zu übermitteln, wonach die Daten an den anderen Knoten übermittelt werden.

2. Knoten (407) gemäß Anspruch 1,
**dadurch gekennzeichnet, dass**
die Identifikationsnummer ein Teil der Protokoll-Adresse ist.

3. Knoten (407) gemäß Anspruch 1,
**dadurch gekennzeichnet, dass**
die Steuereinrichtung (408) dazu ausgelegt ist, die Identifikationsnummer aus der Protokoll-Adresse unter Benutzung einer Hash-Funktion zu berechnen.

4. Knoten (401) für ein Kommunikationssystem, das Knoten aufweist, die miteinander auf der Basis von Protokoll-Adressen kommunizieren, wobei jeder Knoten einzigartig durch eine einzigartige Protokoll-Adresse identifiziert ist, wobei der Knoten aufweist
eine Steuereinrichtung (402), die dazu ausgelegt ist, den Betrieb des Knotens zu steuern,
eine Empfangseinrichtung (405), die dazu ausgelegt ist, Information von anderen Knoten des Kommunikationssystems zu empfangen,
wobei die Steuereinrichtung (402) dazu ausgelegt ist, eine Identifikationsnummer aus der einzigartigen Protokoll-Adresse des Knotens zu erzeugen, wobei die Identifikationsnummer kürzer als die einzigartige Protokoll-Adresse ist, und den Knoten für die Kommunikation mit anderen Knoten in dem Kommunikationssystem zu identifizieren, und wobei die Steuereinrichtung (402) eine Weck-Erfassungseinrichtung (505) aufweist, die dazu ausgelegt ist, eine in einem Weck-Signal durch die Empfangseinrichtung (405) empfangene Identifikationsnummer mit der erzeugten Identifikationsnummer zu vergleichen, um zu bestimmen, ob das Weck-Signal an den Knoten adressiert ist.

5. Knoten gemäß Anspruch 4,
**dadurch gekennzeichnet, dass**
die Identifikationsnummer ein Teil der Protokoll-Adresse ist.

6. Knoten gemäß Anspruch 4,
**dadurch gekennzeichnet, dass**
die Steuereinrichtung dazu ausgelegt ist, die Identifikationsnummer aus der Protokoll-Adresse unter Benutzung einer Hash-Funktion zu berechnen.

7. Knoten gemäß einem der Ansprüche 4 bis 6,
**gekennzeichnet durch**
eine Speichereinrichtung, in der die erzeugte Identifikationsnummer gespeichert ist.

8. Kommunikationssystem, das Knoten aufweist, die miteinander auf der Basis von Protokoll-Adressen kommunizieren, wobei jeder Knoten einzigartig durch eine einzigartige Protokoll-Adresse identifiziert ist, mit
einem Knoten (407) gemäß einem der Ansprüche 1 bis 3 als ein Übermittlungsknoten und
einem Knoten (401) gemäß einem der Ansprüche 4 bis 7 als ein Empfangsknoten, wobei der Übermittlungsknoten und der Empfangsknoten dazu ausgelegt sind, die Identifikationsnummer des Empfangsknotens aus der einzigartigen Protokoll-Adresse des Empfangsknotens auf der Basis derselben Erzeugungsregel zu erzeugen.

9. Kommunikationssystem gemäß Anspruch 8,
**dadurch gekennzeichnet, dass**
der Übermittlungsknoten und der Empfangsknoten dazu ausgelegt sind, die Identifikationsnummer als einen Teil der einzigartigen Protokoll-Adresse zu erzeugen, die den Empfangsknoten identifiziert.

10. Kommunikationssystem gemäß Anspruch 8,
**dadurch gekennzeichnet, dass**
der Übermittlungsknoten und der Empfangsknoten dazu ausgelegt sind, die Identifikationsnummer aus der einzigartigen Protokoll-Adresse, die den Empfangsknoten identifiziert, unter Benutzung derselben Hash-Funktion zu berechnen.

11. Kommunikationsverfahren für die Kommunikation zwischen einem Übermittlungsknoten und einem Empfangsknoten eines Kommunikationssystems, das Knoten aufweist, die miteinander auf der Basis von Protokoll-Adressen kommunizieren, wobei jeder Knoten einzigartig durch eine einzigartige Protokoll-Adresse identifiziert ist,
wobei ein Übermittlungsknoten einen Empfangsknoten mit einer Identifikationsnummer adressiert, die den Empfangsknoten identifiziert, wobei der Übermittlungsknoten und der Empfangsknoten die Identifikationsnummer aus der einzigartigen Protokoll-Adresse, die den Empfangsknoten identifiziert,
auf der Basis derselben Erzeugungsregel erzeugen, wobei die Identifikationsnummer kürzer als die einzigartige Protokoll-Adresse ist, wobei der Übermittlungsknoten vor dem Übermitteln von Daten an den Empfangsknoten die Identifikationsnummer aus der einzigartigen Protokoll-Adresse erzeugt, die den Empfangsknoten identifiziert, und dann ein Weck-Signal, das die Identifikationsnummer aufweist, erzeugt und an den Empfangsknoten übermittelt, und wobei der Empfangsknoten die in dem Weck-Signal empfangene Identifikationsnummer mit der in der Empfangseinrichtung erzeugten Identifikationsnummer vergleicht, um zu bestimmen, ob das Weck-Signal an den Empfangsknoten adressiert ist.

12. Kommunikationsverfahren gemäß Anspruch 15,
**dadurch gekennzeichnet, dass**
der Übermittlungsknoten und der Empfangsknoten die Identifikationsnummer als einen Teil der einzigartigen Protokoll-Adresse erzeugen, die den Empfangsknoten identifiziert.

13. Kommunikationsverfahren gemäß Anspruch 15,
**dadurch gekennzeichnet, dass**
der Übermittlungsknoten und der Empfangsknoten die Identifikationsnummer aus der einzigartigen Protokoll-Adresse, die den Empfangsknoten identifiziert, unter Benutzung derselben Hash-Funktion erzeugen.

## Revendications

1. Noeud (407) pour un système de communication comprenant des noeuds communiquant les uns avec les autres sur la base d'adresses de protocole, chaque noeud étant identifié de manière unique par une adresse de protocole unique, ledit noeud (407) comprenant
un moyen de commande (408) adapté pour commander l'opération dudit noeud,
un moyen de transmission (412) adapté pour transmettre des informations à d'autres noeuds du système de communication,
moyennant quoi ledit moyen de commande (408) est adapté pour commander ledit moyen de transmission (412) pour adresser un autre noeud avec un numéro d'identification identifiant ledit autre noeud, et moyennant quoi ledit moyen de commande (408) avant de transmettre des données à un autre noeud, étant adapté pour générer ledit numéro d'identification à partir de l'adresse de protocole unique identifiant ledit autre noeud, ledit numéro d'identification étant plus court que ladite adresse de protocole unique, et ensuite pour déclencher un générateur de réveil (510) pour générer et transmettre un signal de réveil comprenant ledit numéro d'identification audit autre noeud, après quoi lesdites données sont transmises audit autre noeud.

2. Noeud (407) selon la revendication 1,
**caractérisé en ce que**
ledit numéro d'identification est une partie de ladite adresse de protocole.

3. Noeud (407) selon la revendication 1,
**caractérisé en ce que**
ledit moyen de commande (408) est adapté pour calculer ledit numéro d'identification à partir de ladite adresse de protocole en utilisant une fonction de hachage.

4. Noeud (401) pour un système de communication comprenant des noeuds communiquant les uns avec les autres sur la base d'adresses de protocole, chaque noeud étant identifié de manière unique par une adresse de protocole unique, ledit noeud comprenant
un moyen de commande (402) adapté pour commander l'opération dudit noeud,
un moyen de réception (405) adapté pour recevoir des informations en provenance d'autres noeuds du système de communication,
moyennant quoi ledit moyen de commande (402) est adapté pour générer un numéro d'identification à partir de l'adresse de protocole unique dudit noeud, ledit numéro d'identification étant plus court que ladite adresse de protocole unique et identifiant ledit noeud pour la communication avec d'autres noeuds dans le système de communication, et moyennant quoi ledit moyen de commande (402) comprend un détecteur de réveil (505) adapté pour comparer un numéro d'identification reçu dans un signal de réveil par l'intermédiaire dudit moyen de réception (405) avec ledit numéro d'identification généré afin de déterminer si ledit signal de réveil est adressé au noeud.

5. Noeud selon la revendication 4,
**caractérisé en ce que**
ledit numéro d'identification est une partie de ladite adresse de protocole.

6. Noeud selon la revendication 4,
**caractérisé en ce que**
ledit moyen de commande est adapté pour calculer ledit numéro d'identification à partir de ladite adresse de protocole en utilisant une fonction de hachage.

7. Noeud selon l'une des revendications 4 à 6,
**caractérisé par**
un moyen de mémoire dans lequel ledit numéro d'identification généré est stocké.

8. Système de communication comprenant des noeuds communiquant les uns avec les autres sur la base d'adresses de protocole, chaque noeud étant identifié de manière unique par une adresse de protocole unique, avec
un noeud (407) selon l'une des revendications 1 à 3 comme un noeud de transmission et
un noeud (401) selon l'une des revendications 4 à 7 comme un noeud de réception,
moyennant quoi ledit noeud de transmission et ledit noeud de réception sont adaptés pour générer ledit numéro d'identification dudit noeud de réception à partir de l'adresse de protocole unique dudit noeud de réception sur la base de la même règle de génération.

9. Système de communication selon la revendication 8,
**caractérisé en ce que**
ledit noeud de transmission et ledit noeud de réception sont adaptés pour générer ledit numéro d'identification comme une partie de l'adresse de protocole unique identifiant ledit noeud de réception.

10. Système de communication selon la revendication 8,
**caractérisé en ce que**
ledit noeud de transmission et ledit noeud de réception sont adaptés pour générer ledit numéro d'identification à partir de l'adresse de protocole unique identifiant ledit noeud de réception en utilisant la même fonction de hachage.

11. Procédé de communication pour la communication entre un noeud de transmission et un noeud de réception d'un système de communication comprenant des noeuds communiquant les uns avec les autres sur la base d'adresses de protocole, chaque noeud étant identifié de manière unique par une adresse de protocole unique,
moyennant quoi un noeud de transmission adresse un noeud de réception avec un numéro d'identification identifiant ledit noeud de réception, moyennant quoi ledit noeud de transmission et ledit noeud de réception génèrent ledit numéro d'identification à partir de l'adresse de protocole unique identifiant ledit noeud de réception sur la base de la même règle de génération, ledit numéro d'identification étant plus court que ladite adresse de protocole unique, moyennant quoi ledit noeud de transmission, avant de transmettre des données audit noeud de réception, génère ledit numéro d'identification à partir de ladite adresse de protocole unique identifiant ledit noeud de réception et génère ensuite et transmet un signal de réveil comprenant ledit numéro d'identification audit noeud de réception, et moyennant quoi ledit noeud de réception compare ledit numéro d'identification reçu dans ledit signal de réveil avec ledit numéro d'identification généré dans ledit moyen de réception afin de déterminer si ledit signal de réveil est adressé audit noeud de réception.

12. Procédé de communication selon la revendication 15,
**caractérisé en ce que**
ledit noeud de transmission et ledit noeud de réception génèrent ledit numéro d'identification comme une partie de l'adresse de protocole unique identifiant ledit noeud de réception.

13. Procédé de communication selon la revendication 15,
**caractérisé en ce que**
ledit noeud de transmission et ledit noeud de réception génèrent ledit numéro d'identification à partir de l'adresse de protocole unique identifiant ledit noeud de réception en utilisant la même fonction de hachage.
